# EUROPEAN PATENT APPLICATION

(11) **EP 2 261 540 A1**
(43) Date of publication of application: **15.12.2010**
(21) Application number: 10164729.5
(22) Date of filing: 02.06.2010
(51) Int. Cl.: F16K 47/08

(54) **Decompressor and filter with decompressor**

(30) Priority: 10.06.2009 FI 20095649
(71) Applicant: Temet OY, 00880 Helsinki (FI)
(72) Inventor: Karkkulainen, Timo, 01760 Vantaa (FI)
(74) Representative: Valkeiskangas, Tapio Lassi Paavali

(57) **Abstract**

The invention relates to a decompressor (16) which comprises a chamber (24) comprising an inlet opening (19) for receiving pressure in the chamber (24), a closed-end space (25) for attenuating the pressure received in the chamber (24) and one or more ports (22) provided between the inlet opening (19) and the closed-end space (25) for discharging the dampened pressure out of the chamber (24).

## Description

### BACKGROUND OF THE INVENTION

The invention relates, in general, to a decompressor and, in particular, to a decompressor in accordance with the preamble of claim 1. The present invention also relates to a filter and, in particular, to a cylindrical filter in accordance with the preamble of claim 9, the filter comprising a central channel and at least one filter element placed radially around the central channel.

Filters, various valves and other comparable parts of ventilation installations or ventilation ducts may be exposed to high pressure, for instance, by the effect of a pressure wave. In accordance with prior art, pressure is to be lowered or the pressure wave is to be dampened by means of various decompressors. The decompressors are destined to prevent excessive pressure from propagating inside a filter, a valve or other part of the ventilation installation. Prior art decompressors are, for instance, various perforated plates or meshes that decelerate propagation of pressure. Decompressors are used, for instance, in cylindrical filters, which are known of a variety of applications, in which high filtering capacity is required in a confined space, for instance. According to the prior art, a cylindrical filter comprises a frame, which consists of cylindrical jacket, a first end plate, which comprises an inlet opening for conveying a flowing substance to be filtered into the filter, and a second end plate, which comprises an outlet opening for conveying the filtered flowing substance out of the filter. In the middle of the cylindrical filter there is further provided a central channel which extends in the axial direction of the cylindrical filter inside the filter and into which the flowing substance to be filtered is conveyed through the inlet opening. Radially around the central channel there is arranged a cylindrical filter element which surrounds the central channel or provides the central channel. The filter jacket, in turn, surrounds the cylindrical filter element radially. Between the filter element and the jacket there is advantageously provided a gap which communicates with the outlet opening of the filter. Thus, pressure passes through the filter such that it enters the filter through the inlet opening and propagates to the central channel. From the central channel the pressure propagates radially through the filter element into the gap between the filter element and the filter, wherefrom the pressure propagates through the outlet opening out of the cylindrical filter. Excessive pressure or pressure wave propagating through the filter may easily damage the filter element. In order to restrict the pressure propagating into the filter element or to dampen the pressure wave, on a surface facing the central channel of the cylindrical filter element there is arranged a perforated plate, which serves as a decompressor and dampens the pressure propagating to the filter element.

A problem with the above-described prior art decompressors and cylindrical filters including a decompressor is that the prior art decompressors, such as perforated plates and meshes, have to be made dense so as to achieve sufficient decompression. Densely perforated plates and meshes, in turn, cause considerable pressure losses, and consequently hamper the flow. Pressure loss has a significant negative effect on the capacity of the filter or another comparable part or channel of the ventilation installation.

### BRIEF DESCRIPTION OF THE INVENTION

The object of the invention is to provide a decompressor such that the above problems will be solved. This is achieved by a decompressor in accordance with the characterizing part of claim 1, which decopressor is characterized by comprising a chamber comprising an inlet opening for receiving pressure in the chamber, a closed-end space for attenuating the pressure received in the chamber and one or more ports provided between the inlet opening and the closed-end space so as to discharge the dampened pressure out of the chamber. This is further achieved by a cylindrical filter in accordance with the characterizing part of claim 9, which is **characterized in that** the filter comprises a decompressor arranged in a central channel and comprising a closed-end space for attenuating the pressure conveyed to the central channel and one or more ports for conveying the dampened pressure from the decompressor to the filter element.

The preferred embodiments of the invention are disclosed in the dependent claims.

The invention is based on the idea of providing a decompressor that comprises a chamber having an inlet opening for receiving pressure. In the incoming direction of pressure, substantially opposite to the inlet opening, the chamber further comprises a closed-end space into which the pressure from the inlet opening is discharged. The closed-end space arrests pressure propagation and dampens the pressure. At the same time, the closed-end space reflects pressure backwardly, whereby it generates counter pressure for the pressure entering the chamber through the inlet opening further attenuating the incoming pressure. Between the inlet opening and the closed-end space there is provided one or more ports through which the dampened pressure is discharged out of the chamber. In other words, the decompressor is provided such that first the pressure enters the closed-end space, where it dampens, and thereafter, the dampened pressure is allowed to discharge through the ports. The decompressor may also comprise a pressure limiter which is provided outside the chamber at a distance from the ports and wherewith the pressure discharging through the ports will collide deflecting the direction of the pressure discharging from the ports, which further dampens the pressure. In an embodiment the chamber of the decompressor is closed at one end, the closed end forming a closed-end space, and in a side wall between an open end and the closed-end space there are provided ports. In the cylindrical filter, the above-described decompressor is placed in the central channel of the cylindrical filter, around which central channel there is provided one or more filter elements. Advantageously, the decompressor does not fill the central channel completely, but a gap, which distributes pressure evenly onto the filter element, remains between the central channel wall and the decompressor.

The method and the system of the invention have an advantage that they provide extremely efficient decompression, attenuating pressure waves particularly efficiently. Efficient decompression provided by the decompressor of the invention does not, however, produce so great pressure loss as the perforated plates and meshes of the prior art, and consequently it does not restrict the flow through the filter, for instance. In other words, by means of the decompressor of the invention it is possible to provide efficient decompression without excessive pressure loss. The cylindrical filter with the decompressor of the invention resists well a pressure wave, for instance, without a great pressure loss. A low pressure loss ensures good flow through the filter element of the filter and hence through the entire filter.

### BRIEF DESCRIPTION OF THE DRAWINGS

In the following the invention will be described in greater detail in connection with preferred embodiments, with reference to the attached drawings, in which
Figure 1 shows an embodiment of the decompressor in accordance with the present invention, and
Figure 2 shows an embodiment of a cylindrical filter having the decompressor in accordance with the present invention.

### DETAILED DESCRIPTION OF THE INVENTION

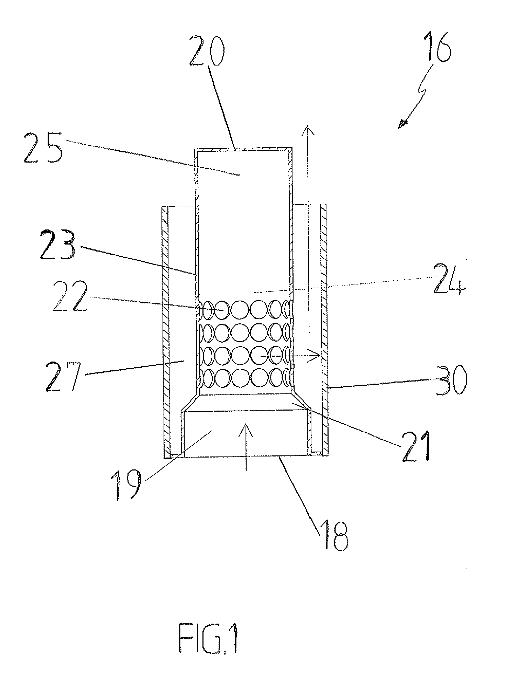

With reference to Figure 1, it shows an embodiment of a decompressor 16 in accordance with the present invention. The embodiment of Figure 1 shows a tubular decompressor 16, but it may also be of some other shape. The decompressor 16 comprises a first end 18 having an inlet opening 19 for receiving pressure in the decompressor 16. The first end 18 may be completely or partly open and it may comprise one or more inlet openings 19. In accordance with Figure 1, at the first end there is provided an inlet cone 21, which reduces the cross-sectional area of a chamber 24 and throttles the flow entering the chamber 24 through the inlet opening. The decompressor 16 also comprises a second end 20, which is solid, i.e. closed. In other words, the decompressor 16 of Figure 1 is a tube closed at one end. The tube constitutes the chamber 24 of the decompressor 16, whereto the pressure is discharged through the inlet opening 19. The closed second end 20 of the chamber 24 forms a closed-end space 25. In this connection a closed-end space refers to a space whose one side is open and wherefrom the discharged pressure or flow is able to exit only the same route it entered the space. The closed-end space 25 is provided such that the pressure entering the chamber 24 through the inlet opening 19 propagates in the chamber to the closed-end space 25. The closed-end space 25 is advantageously provided opposite to the inlet opening 19 in the incoming direction of the pressure. In the closed-end space 25 the pressure hits the second end 20 of the chamber and is dampened. At the same time the pressure reflects backwardly from the second end 20. The pressure reflecting from the second end 20 or the closed-end space 25 produces a counter pressure to the pressure incoming through the inlet opening 19, or a counter pressure to an after pressure of a pressure wave, thus attenuating the incoming pressure or the after pressure. The wall of the second end 20 may be straight, like in Figure 1 or it may be shaped. The shape of the end 20 thus contributes to how the pressure is reflected from the closed-end space 25. In the solution of Figure 1 the chamber 24 is cylindrical, but alternatively the chamber 24 may also be of another shape, such as rectangular, conical, oval, round or of another similar shape.

The chamber 24 is further provided with ports 22, through which the dampened pressure of the closed-end space 25 is discharged from the chamber 24. The ports are provided in the side walls or jacket 23 of the chamber 24 extending between the first and the second ends 18, 20. The ports 22 are further placed between the closed-end space 25 and the inlet opening 19. In other words, the ports 22 are placed at a distance from the second end 20. Advantageously, the ports 22 are provided in the side wall 23 of the tube between the first and the second ends 18, 20 at a distance from the closed second end 20 for forming a closed-end space 25 at the closed end 20. The ports 22 may be round, oval, rectangular, polygonal or of any other shape. In accordance with Figure 1 the ports 22 are provided in the side wall of the chamber 24 such that the pressure is discharged from the chamber 24 in a direction that is substantially transverse to the incoming direction of the pressure entering the chamber 24.

In case the pressure cannot be lowered sufficiently by means of the chamber 24, it is possible to provide a pressure limiter 30 outside or around the chamber 24. In the embodiment of Figure 1 the pressure limiter 30 is a pressure plate wherewith the pressure discharging through the ports 22 collides simultaneously deflecting the direction of the pressure. In the figure the pressure limiter 30 is a sleeve-like jacket placed around the tubular chamber 24 and locating at a distance from the side wall 23 of the chamber 24. In other words, a gap 27 will remain between the pressure limiter 30 and the side wall 23. The pressure limiter 30 is placed at least at the ports such that the pressure discharging through the ports will hit the pressure limiter 30. The gap 30 equalizes the pressure between the side wall 23 and the pressure limiter 30 preventing generation of significant pressure losses.

In Figure 1, arrows show the passage of pressure in the decompressor 16. First, the pressure enters the chamber 24 through the inlet opening 19 and propagates into the closed-end space 25 attenuating the pressure. Thereafter, the pressure is allowed to discharge through the ports 22 from the chamber 24, whereafter the pressure hits the pressure limiter 30 which further dampens the pressure. In accordance with the above, the decompressor 16 of Figure 1 operates in two phases. In other words, the closed-end space 25 of the decompressor 1 receives pressure or a pressure wave attenuating it and reflecting it dampened backwardly. From the closed-end space the pressure propagates backwardly and is discharged through the ports 22 out of the chamber 24.

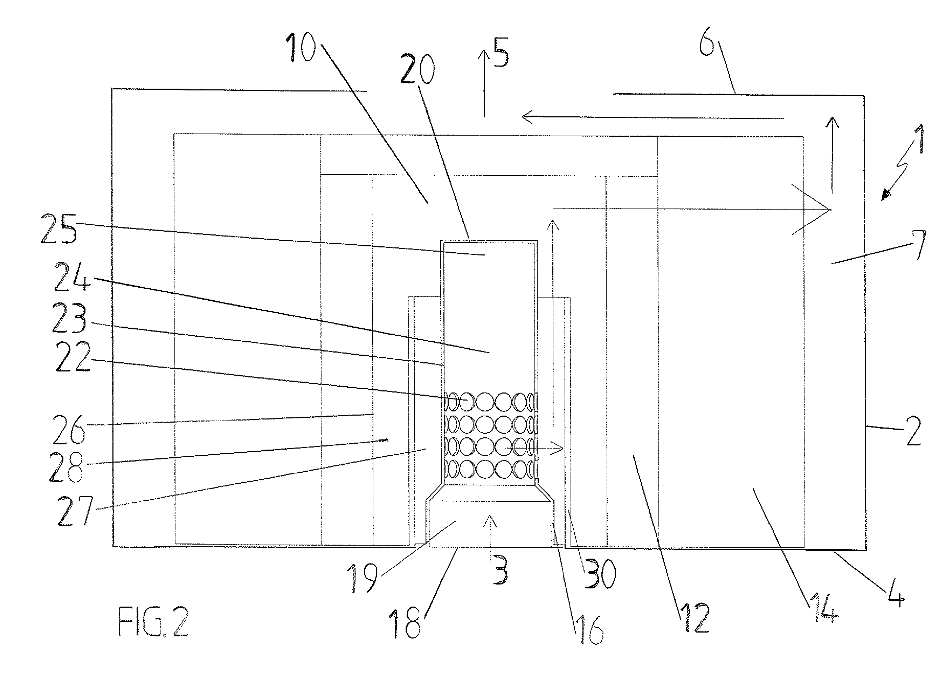

Figure 2 shows a cylindrical filter 1, which comprises the decompressor 16 of the present invention. The cylindrical decompressor comprises a frame having a cylindrical jacket 2, a first end 4 and a second end 6. The first end 4 comprises an inlet 3 for conveying a flowing substance to be filtered into the filter 1. The second end 6, in turn, comprises an outlet 5 for discharging the filtered flowing substance out of the filter 1. The cylindrical filter 1 further comprises a central channel 10 which communicates with the inlet 3 and which is provided in the middle of the cylindrical jacket 2, as shown in Figure 2. Around the central channel 10 there is mounted, preferably in a radial direction, one or more filter elements. In the embodiment of Figure 2, around the central channel 10 there is mounted a first filter element 12, which may be a HEPA filter, for instance. Around the first filter element 12 there is further mounted, radially, a second filter element 14, which may be an activated carbon filter, for instance. Between the filter elements 12, 14 and the jacket 2 of the filter 1 as well as between the filter elements 12, 14 and the second end 6 there is a gap 7 which has flow communication with the outlet 5 of the filter 1. According to the above, the cylindrical filter 1 operates such that the flowing substance to be filtered is conveyed through the inlet 3 into the central channel 10, wherefrom the flowing substance passes through the filter elements 12 and 14 radially to the central channel 10. The filtered flowing substance from the filter elements 12, 14 passes to the gap 7, wherefrom it flows further through the outlet 5 out of the filter.

A problem with the prior art cylindrical filters has been that excessive pressure or a pressure wave easily damages at least one of the filter elements 12, 14. In accordance with Figure 2, this problem has been solved in the cylindrical filter of the present invention such that a decompressor 16 of Figure 1 and of the present invention is mounted in the central channel 10. The decompressor 16 is placed in the central channel 10 such that the pressure from the inlet 3 of the filter 1 propagates via the inlet 19 of the decompressor 16 into the chamber 24 and further into the closed-end space 25 of the chamber 24 and then through the ports 22 out of the chamber 24. The pressure discharged from the ports 22 collides with the pressure limiter 30, is dampened and changes direction. Optionally the pressure limiter 30 may also be omitted. In accordance with the above, all the subject matter relating to the decompressor 16 presented in connection with Figure 1 also applies to the decompressor 16 mounted on the cylindrical filter 1. Hence, the structure and operation of the decompressor 16 will not be described again.

The pressure discharging from the decompressor propagates into the central channel 10. The decompressor 16 may be mounted in the central channel such that the decompressor 16 fills the central channel partly or completely. In accordance with Figure 2, the decompressor 16 extends only for a portion of the length of the central channel 10, but alternatively it could also extend throughout the length of the central channel 10. Preferably the decompressor 16 is arranged inside the central channel 10 such that a gap 28 will remain between the decompressor 16 and the wall 26 of the central channel 10 in the radial direction of the central channel 10. The gap 28 may thus be between the chamber 24 and the wall 26 of the central channel 10, or alternatively, between the decompressor 30 and the wall 26 of the central channel 10. The gap 26 is destined to equalize the pressure before the filter elements 12, 14 and to distribute the flux of the flowing substance to be filtered evenly to the filter elements 12, 14.

In Figure 2 the arrows denote passage of pressure through the cylindrical filter 1. First, the pressure enters the chamber 24 through the inlet 3 of the filter 1 and the inlet 19 of the decompressor 16 and propagates to the closed-end space 25, which dampens the pressure. Thereafter the pressure is allowed to discharge through the ports 22 out of the chamber 24 substantially in a direction that is transverse or perpendicular to the incoming direction of the pressure. The pressure discharged from the ports 22 propagates to the gap 27 and collides with the pressure limiter 30, which further dampens the pressure and deflects the propagation direction of the pressure and discharges the pressure out of the decompressor 16, as shown in Figure 2. The pressure is discharged from the decompressor 16 into the central channel 10, wherefrom it propagates radially in relation to the longitudinal axis of the central channel 10 through the filter elements 12, 14 into the gap 7 and further out of the filter 1 through the outlet 5.

On the basis of the above it should be noted that the shape of the decompressor 16 and the details thereof may vary, and additionally, the decompressor 16 may be used in various filters, pressure valves and the like, where decompression is required without producing large pressure losses.

It is obvious to a person skilled in the art that as technology advances the basic idea of the invention may be implemented in a variety of ways. Thus, the invention and the embodiments thereof are not restricted to the above-described examples, but they may vary within the scope of the claims.

## Claims

1. A decompressor (16), **characterized in that** the decompressor (16) comprises a chamber (24) comprising an inlet opening (19) for receiving pressure in the chamber (24), a closed-end space (25) for attenuating the pressure received in the chamber (24) and one or more ports (22) provided between the inlet opening (19) and the closed-end space (25) for discharging the dampened pressure out of the chamber (24).

2. The decompressor (16) of claim 1, **characterized in that** the chamber (24) comprises a first end (18) having an inlet opening (19) for receiving pressure in the chamber (24), a second end (20) with a closed wall, opposite to the first end (18), and side walls or a jacket (23) extending between the first and the second ends (18, 20).

3. The decompressor (16) of claim 2, **characterized in that** the ports (22) are provided in the side walls or the jacket (23) at a distance from the second end (20).

4. The decompressor (16) of any one of the preceding claims 1 to 3, **characterized in that** the chamber (24) is a tube closed at one end.

5. The decompressor (16) of claim 4, **characterized in that** the ports (22) are provided in the side wall of the tube between the first and the second ends (18, 20) at a distance from the closed second end (20) for forming the closed-end space (25) at the closed end (20).

6. The decompressor (16) of any one of claims 2 to 5, **characterized in that** it comprises a pressure limiter (30) provided at a distance around the chamber (24) for attenuating the pressure to be discharged through the ports (22).

7. The decompressor (16) of claim 6, **characterized in that** the pressure limiter (30) is a pressure plate which is placed outside the chamber (24) at the ports (22) and wherewith the pressure discharging through the ports (22) is arranged to collide.

8. The decompressor (16) of claim 6 or 7, **characterized in that** the pressure limiter (30) is a sleeve-like jacket that is mounted around the chamber (24).

9. A cylindrical filter (1) comprising a central channel (10) and at least one filter element (12, 14) placed radially around the central channel (10), **characterized in that** the filter (1) comprises a pressure limiter (16) arranged in the central channel (10) and comprising a closed-end space (25) for attenuating the pressure conveyed into the central channel (10) and one or more ports (22) for conveying the dampened pressure from the decompressor (16) to a filter element (12, 14).

10. The filter (1) of claim 9, **characterized in that** the decompressor (16) comprises the chamber (24) having a first end (18) that is at least partly open for receiving pressure in the decompressor (16) and a solid second end (20) providing a closed-end space (25).

11. The filter (1) of claim 10, **characterized in that** the ports (22) are provided in a side wall of the chamber (24) between the first end (18) and the closed-end space (25).

12. The filter (1) of claim 10, **characterized in that** the ports (22) are provided in a side wall of the chamber (24) between the first and the second ends (18, 20) at a distance from the second end (20) for forming a closed-end space (25).

13. The filter (1) of any one of the preceding claims 9 to 12, **characterized in that** the decompressor is a tube closed at the second end (20).

14. The filter (1) of any one of the preceding claims 9 to 13, **characterized in that** the decompressor (16) comprises a pressure limiter (30) provided at a distance around the chamber (24) for attenuating the pressure discharging from the ports (22).
